# EUROPEAN PATENT SPECIFICATION

(11) **EP 0 880 211 B1**
(45) Date of publication and mention of the grant of the patent: **16.07.2003**
(21) Application number: 98108420.5
(22) Date of filing: 08.05.1998
(51) Int. Cl.: H02G 7/00

(54) **Warning ball for overhead electric transmission lines**
Warnungskugel für Freileitungssystem
Boule d'avertissement pour lignes électriques aériennes

(30) Priority: 21.05.1997 IT MI971188
(43) Date of publication of application: 25.11.1998
(73) Proprietor: OFFICINA FRATELLI BERTOLOTTI S.p.A., 10088 Volpiano (TO) (IT)
(72) Inventor: Bertolotti, Adriano, 10088 Volpiano (TO) (IT); Bertolotti, Luciano, 10088 Volpiano (TO) (IT)
(74) Representative: Ferraiolo, Ruggero

(56) References cited:
- EP-A- 0 486 744
- CH-A- 579 838
- US-A- 3 362 377

## Description

The present invention relates to a warning ball for overhead electric transmission lines.

The field of the invention is that of warning signals that, mounted on the topmost wire of an overhead electric transmission line, generally the earth wire, and appropriately spaced and coloured, serve to signal the presence of the transmission line to the pilot of an aircraft or helicopter in areas where the wires are high above the ground, as happens, for example, when the line has to cross a valley; as a general rule, these signals are hollow balls of a suitable diameter and made up of two hemispheres that are generally clamped to each other by means of clip devices; the balls are clamped onto the wire during the construction phase of the transmission line by workmen moving along the wire and employing a item of equipment known as "bicycle".

Document US-A-3 362 377 discloses a span marker or warning ball that, according to known practice, comprises a pair of shells movable about a common axis from an open position and a closed position to define a substantially closed hollow body and a central opening through said body for receiving a wire of the electric transmission line. One inner shell is movable into the outer shell whereas an intricate tool connected with the marker has to be used for installing the marker on the wire.

Document CH 579 838 is also known that discloses a marker for overhead electric lines made of two substantially identical shells forming, once they are mounted one onto the other in closed position, a spherical body wherein two diametrically opposed parts comprise a passage for the wire and means for clamping the wire.

The drawback of state-of-the-art clamping devices consists of the fact that neither the fixing of the two hemispheres to each other nor the clamping of the ball to the wire are either strong enough or sufficiently permanent to satisfy regulations and good practice.

The regulations currently in force prohibit use of the "bicycle" at any time after the construction of the electric line, so that the installation of new balls or the removal of old balls have to be effected with the help of robots or helicopters and need to be effected easily and rapidly.

Given this situation, the problem underlying the invention is to provide a warning ball with fixing and clamping devices that will ensure good tightness and durability and imply only simple and quick operations.

The problem is solved by a warning ball according to claim 1.

The angular sweep of each shell in the plane perpendicular to the wire is less than 180°, so that appropriate dimensioning the said seating will render the vice suitable for tightening onto a preselected range of wires of different diameter.

Preferably, each shell will also carry a visor or mask to cover the joint between the two shells.

Preferably again, the two parts of the vice facing each other will carry, respectively, a projection and a corresponding cavity that will act as a guide during the tightening.

The principal advantage of this ball is constituted by its simplicity in use; in fact, the two shells can be hinged to each other before the ball is placed onto the wire, with the two shells kept appropriately apart, and then positioned on the wire in such a way as to make the latter correspond to the said seating, after which the two parts of the vice can be transversely tightened to grip the wire.

The invention will now be described in greater detail with the help of an implementation example and a number of drawings, of which
Figure 1 shows the side view of a ball mounted on a wire,
Figure 2 shows a first and partially sectioned front view of the vice,
Figure 2a shows a detail,
Figure 3 shows a side view of the vice,
Figure 4 shows a second front view of the vice and
Figure 5 shows a front view of a ball.

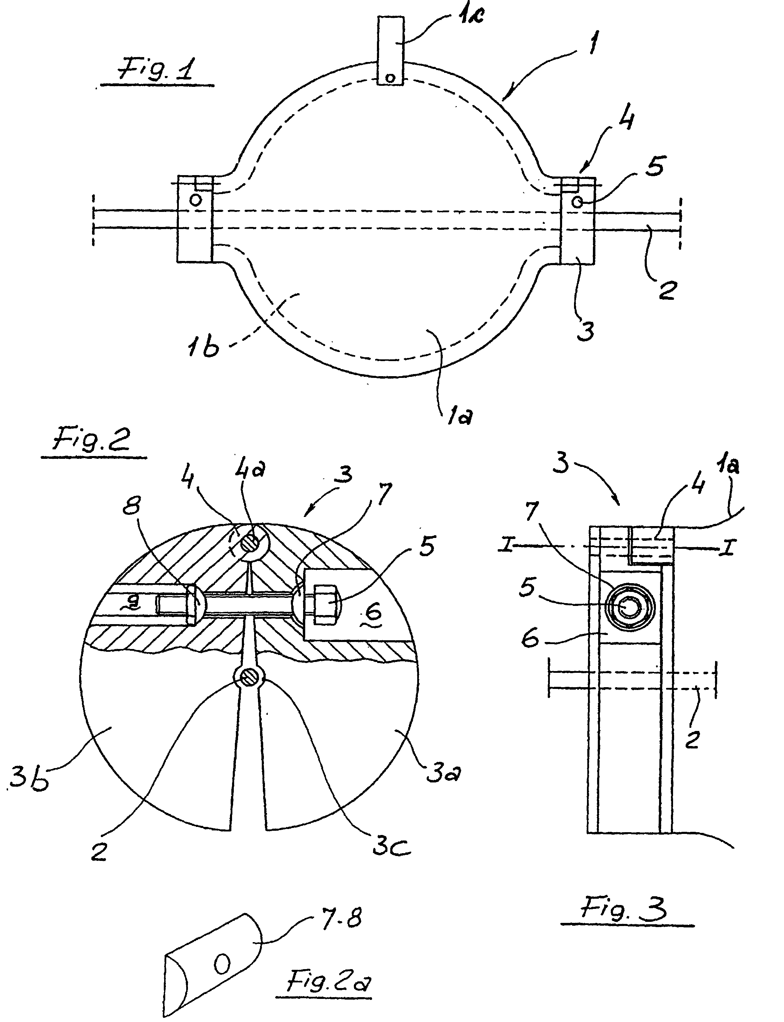

Figure 1 shows a plastic ball 1 fixed to a wire 2 by means of the vice 3 ; as can be seen from Figures 2 and 3, the connection between the two hemispheres or shells 1a and 1b that make up the ball 1 is realized by means of the hinge 4 , which is so arranged that its axis I-I is parallel to the wire 2, while the clamping of the ball onto the wire is realized by means of the two parts 3a and 3b of the vice 3 which are tightened by means of the bolt 5 ; in the upper part of the ball there is the handle 1c, made of a strip of plastic and having its two ends riveted to, respectively, the shells 1a and 1b.

Examining Figures 2 and 3 together, it can be seen that the two parts 3a and 3b of the vice 3 are connected at the top by means of the hinge 4 ( 4a is the hinge pin that has its axis I-I parallel to the wire 2 ) and that the said two parts are provided at their centre with two curved seatings that face each other to clamp the wire 2 when the shells are tightened; the association of the two curved seatings, jointly indicated by 3c, is suitable for clamping wires of a variable diameter within a preselected range and for this reason the sweep of the two parts 3a and 3b, as also that of the shells that make up the ball, is less than 180°. With a view to making it possible for the two shells to be applied to the wire when they are already connected to each other by means of the hinge 4 and with the tightening device of the vice already prepared to engage the wire, the said device is positioned between the wire and the hinge; a clamping bolt 5 is introduced into a chamber 6 formed within the part 3a , into a first semispherical element 7 housed in a corresponding semispherical cavity in the bottom of the chamber 6 and into a hole in the adjacent wall of the part 3a; it is then passed through a hole in the adjacent wall of the part 3b and screwed into the threaded hole of a second semispherical hexagonal element 8 housed in a corresponding semispherical hexagonal cavity at the bottom of the chamber 9 , which has a hexagonal section.

Figure 2a shows that, alternatively, the semispherical elements 7 and 8 may also be semispherical-cylindrical, which prevents them from rotating in their respective seatings and simplifies the machining of the said seating and the chamber 9.

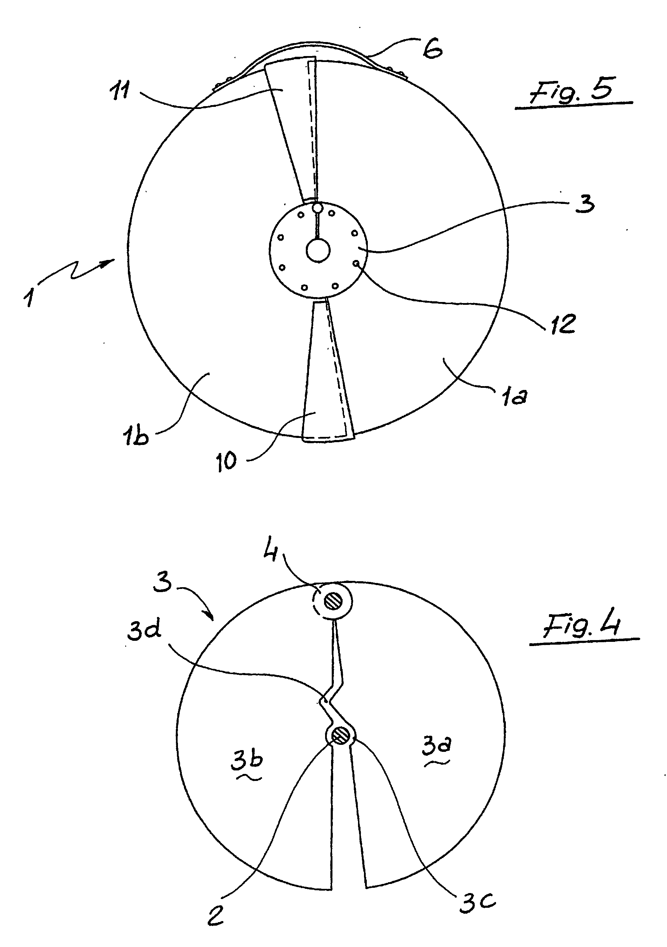

Figure 4 shows that, in a position between the hinge 4 and the wire 2, the two parts 3a and 3b of the vice 3 are provided with, respectively, a projection and a corresponding cavity 3d that act as a guide during the tightening of the vice.

Figure 5, where the ball 1 can be seen with the two shells 1a, 1b clamped tight against each other, though without a wire between them, shows that the two shells are provided with, respectively, the visors 10 and 11 that serve to cover the upper and lower slits that might be formed between the shells as a result of their incomplete closure. For example, when the ball is mounted on a wire of one of the larger-diameter wires within the envisaged range, the lower slits may be of quite considerable size and the visor 10 will cover it completely. Figure 5 also shows the rivets 12 that fix the two parts of the vice onto the flat surfaces of the two shells crossed by the wire (these surfaces have the form of a circular crown).

## Claims

1. A warning ball (1) for overhead electric transmission lines made up of two substantially hemispherical shells (1a, 1b) that come together in a plane passing through a wire (2) of said transmission line, **characterized in that**
- two vices (3) are provided, each having a first part (3a) and a second part (3b),
- whereby the first parts (3a) are fixed on two opposite walls of the first shell (1a) crossed by the wire (2),
- whereby the second parts (3b) are fixed on two opposite walls of the second shell (1b) crossed by the wire (2),
- whereby peripheral hinging means (4) are provided for engaging the first part (3a) of each vice (3) with the respective second part (3b),
- whereby the hinging means (4) have an axis of rotation (I-I) parallel to the wire (2),
- whereby the first part (3a) and the second part (3b) of each vice (3) are provided with tightening and clamping means (5, 7, 8) for realizing a tightening transverse to and for clamping onto the wire (2) positioned in a seating (3c) formed in the two parts of the vice.

2. A warning ball in accordance with claim 1, **characterized in that** the said tightening and clamping means (5, 7, 8) are positioned between the said peripheral hinging means (4) and said seating (3c) for the wire (2).

3. A warning ball in accordance with claims 1 and 2, **characterized in that** said tightening and clamping means (5, 7, 8) comprise a bolt (5) that crosses the two adjacent walls of the two parts (3a, 3b) of the vice (3) and a threaded element (8) into which there is screwed the threaded end of the bolt.

4. A warning ball in accordance with claim 1, **characterized in that** the angular sweep of each shell (1a, 1b) in the plane perpendicular to the wire (2) is less than 180°, so that the said seating (3c) may be dimensioned for clamping onto a preselected range of wires (2) of different diameter.

5. A warning ball in accordance with claims 1 and 4, **characterized in that** each shell (1a, 1b) is provided with a visor (10,11) to cover a slit between the two shells.

6. A warning ball in accordance with the preceding claims, **characterized in that** the two parts of the vice facing each other (3a,3b) are provided with, respectively, a projection and a corresponding cavity that act jointly (3d) as a guide during the tightening of the vice.

## Patentansprüche

1. Warnkugel (1) für elektrische Freileitungen, bestehend aus zwei im wesentlichen halbkugelförmigen Schalen (1a, 1b), die in einer Ebene zusammengefügt sind, die durch ein Kabel (2) der Freileitung verläuft,
**dadurch gekennzeichnet, dass** zwei Zwingen (3) vorgesehen sind, von denen jede einen ersten Teil (3a) und einen zweiten Teil (3b) aufweist,
- wobei die ersten Teile (3a) an zwei gegenüberliegenden Wänden der ersten Schale (la) befestigt sind, die von dem Kabel (2) überkreuzt werden,
- wobei die zweiten Teile (3b) an zwei gegenüberliegenden Wänden der zweiten Schale (1b) befestigt sind, die von dem Kabel (2) überkreuzt werden,
- wobei am Umfang liegende Scharniermittel (4) vorgesehen sind, zum Ineingriffbringen des ersten Teils (3a) jeder Zwinge (3) mit dem jeweiligen zweiten Teil (3b),
- wobei die Scharniermittel (4) eine erste Drehachse (I-I) parallel zu dem Kabel (2) aufweisen,
- wobei der erste Teil (3a) und der zweite Teil (3b) jeder Zwinge (3) mit Festzieh- und Klemmmitteln (5, 7, 8) versehen sind zum Bewirken eines Festziehens in Querrichtung und einer Festklemmung auf dem Kabel (2), das in einem Sitz (3c) angeordnet ist, der in den beiden Teilen der Zwinge ausgebildet ist.

2. Warnkugel nach Anspruch 1,
**dadurch gekennzeichnet, dass** die Festzieh- und Klemmmittel (5, 7, 8) zwischen dem am Umfang liegenden Scharniermittel (4) und dem Sitz (3c) für das Kabel (2) angeordnet sind.

3. Warnkugel nach Anspruch 1 und 2,
**dadurch gekennzeichnet, dass** die Festzieh- und Klemmmittel (5, 7, 8) eine Schraube (5) aufweisen, die die beiden benachbarten Wände der beiden Teile (3a, 3b) der Zwinge (3) überkreuzt, und ein Gewindeelement (8), in das das Gewindeende der Schraube eingeschraubt ist.

4. Wanikugel nach Anspruch 1,
**dadurch gekennzeichnet, dass** die Winkelerstreckung jeder Schale (1a, 1b) in der zum Kabel (2) senkrechten Richtung kleiner als 180° ist, so dass der Sitz(3c) für ein Festklemmen auf einem vorgegebenen Bereich von Kabeln (2) mit unterschiedlichem Durchmessers dimensioniert werden kann.

5. Warnkugel nach Anspruch 1 und 4,
**dadurch gekennzeichnet, dass** jede Schale (1a, 1b) mit einer Blende (10, 11) zum Abdecken eines Schlitzes zwischen den beiden Schalen versehen ist.

6. Warnkugel nach den vorangehenden Ansprüchen,
**dadurch gekennzeichnet, dass** die einander zugewandten beiden Teile (3a, 3b) der Zwinge mit jeweils einem Vorsprung und einer entsprechenden Vertiefung versehen sind, die gemeinsam (3d) als Führung beim Festziehen der Zwinge dienen.

## Revendications

1. Sphère de signalisation (1) pour lignes aériennes de transport d'électricité faite de deux coques (1a, 1b) sensiblement hémisphériques qui se rejoignent dans un plan qui passe par un fil (2) de la ligne de transport,
**caractérisée en ce qu'**
- il est prévu deux étaux (3) dont chacun comprend une première partie (3a) et une deuxième partie (3b),
- les premières parties (3a) étant fixées sur deux parois opposées de la première coque (1a) traversée par le fil (2),
- les deuxièmes parties (3b) étant fixées sur deux parois opposées de la deuxième coque (1b) traversée par le fil (2),
- des moyens d'articulation périphériques (4) sont prévus pour mettre la première partie (3a) de chaque étau (3) en prise avec la deuxième partie (3b) respective,
- les moyens d'articulation (4) ayant un axe de rotation (I-I) parallèle au fil (2),
- la première partie (3a) et la deuxième partie (3b) de chaque étau (3) étant munies de moyens de serrage et de pincement (5, 7, 8) destinés à réaliser un serrage transversalement au fil (2) et à obtenir un pincement sur le fil (2) positionné dans un siège (3c) formé dans les deux parties de l'étau.

2. Sphère de signalisation selon la revendication 1,
**caractérisée en ce que**
les moyens de serrage et de pincement (5, 7, 8) sont positionnés entre les moyens d'articulation périphériques (4) et le siège (3c) prévu pour le fil (2).

3. Sphère de signalisation selon les revendications 1 et 2,
**caractérisée en ce que**
les moyens de serrage et de pincement (5, 7, 8) comprennent une vis (5) qui traverse les deux parois adjacentes des deux parties (3a, 3b) de l'étau (3) et un élément fileté (8) dans lequel se visse l'extrémité filetée de la vis.

4. Sphère de signalisation selon la revendication 1,
**caractérisée en ce que**
l'angle de balayage de chaque coque (1a, 1b) dans le plan perpendiculaire au fil (2) est de moins de 180°, de sorte que le siège (3c) peut être dimensionné pour se pincer sur une gamme présélectionnée de fils (2) de différents diamètres.

5. Sphère de signalisation selon les revendications 1 et 4,
**caractérisée en ce que**
chaque coque (1a, 1b) est munie d'une visière (10, 11) destinée à couvrir une fente entre les deux coques.

6. Sphère de signalisation selon les revendications précédentes,
**caractérisée en ce que**
les deux parties (3a, 3b) de l'étau qui se font face sont munies respectivement d'une saillie et d'une cavité correspondante qui se comportent conjointement (3d) comme un guide pendant le serrage de l'étau.
